Europäisches Patentamt

(19) European Patent Office

Office européen des brevets

(11) Numéro de publication: **0 200 271**
**B1**

(12) **FASCICULE DE BREVET EUROPEEN**

(45) Date de publication du fascicule du brevet:
31.01.90

(51) Int. Cl.⁴: **H 04 L 27/06, H 04 L 27/22**

(21) Numéro de dépôt: 86200712.7

(22) Date de dépôt: 25.04.86

(54) Circuit de récupération de l'onde porteuse de systèmes de transmissions numériques.

(30) Priorité: 30.04.85 FR 8506561

(43) Date de publication de la demande:
05.11.86 Bulletin 86/45

(45) Mention de la délivrance du brevet:
31.01.90 Bulletin 90/5

(84) Etats contractants désignés:
BE CH DE FR GB IT LI NL SE

(56) Documents cités:
EP-A- 0 118 156
FR-A- 2 552 959
US-A- 3 970 946
US-A- 4 057 762
US-A- 4 334 312

ELECTRONICS & COMMUNICATIONS IN JAPAN, vol. 63,
no. 7, 1980, pages 75-84, Scripta Publishing Co., Silver
Spring, Maryland, US; I. HORIKAWA et al.: "16-QAM
carrier recovery with selective gated phase-locked
loop"
IEEE TRANSACTIONS ON COMMUNICATIONS, vol.
COM-31, no. 1, janvier 1983, pages 130-136, IEEE, New
York, US; A. LECLERT et al.: "Universal carrier recovery
loop for QASK and PSK signal sets"

(73) Titulaire: **LABORATOIRES D'ELECTRONIQUE PHILIPS,
3, Avenue Descartes, F-94450 Limeil-Brévannes (FR)**
(84) Etats contractants désignés: **FR**

(73) Titulaire: **N.V. Philips' Gloeilampenfabrieken,
Groenewoudseweg 1, NL-5621 BA Eindhoven (NL)**
(84) Etats contractants désignés: **BE CH DE GB IT LI NL SE**

(72) Inventeur: **Derperben, Lydie, Société Civile
S.P.I.D. 209, rue de l'Université, F-75007 Paris (FR)**
Inventeur: **Sari, Hikmet, Société Civile S.P.I.D. 209, rue
de l'Université, F-75007 Paris (FR)**
Inventeur: **Moridi, Said, Société Civile S.P.I.D. 209, rue de
l'Université, F-75007 Paris (FR)**

(74) Mandataire: **Landousy, Christian et al, Société Civile
S.P.I.D. 209, Rue de l'Université, F-75007 Paris (FR)**

## Description

L'invention concerne un circuit de récupération de l'onde porteuse d'une onde modulée numériquement de symétrie de phase $2\pi/M$, où M est l'ordre de la symétrie, muni de moyens d'acquisition automatiques et rapides, comprenant un oscillateur commandable en tension ayant une sortie délivrant ladite onde porteuse et une entrée de commande sur laquelle est appliqué un signal d'erreur $\varepsilon(\phi)$ afin de modifier la phase de l'oscillateur et l'asservir à celle de l'onde modulée numériquement, celle-ci étant introduite:

— sur une première voie comprenant en série:

- un démodulateur recevant l'onde modulée et la sortie de l'oscillateur, et délivrant un signal démodulé $X_1$,

- un filtre passe-bas agissant sur le signal démodulé $X_1$ et délivrant un signal filtré X,

- des moyens de reconstruction d'un signal $\hat{X}$ et de détermination de l'erreur $e_x = X - \hat{X}$ entre les signaux X et $\hat{X}$,

— sur une seconde voie comprenant en série:

- un déphaseur à 90° du signal de l'oscillateur

- un démodulateur recevant l'onde modulée et la sortie du déphaseur et délivrant un signal démodulé $Y_1$,

- un filtre passe-bas agissant sur le signal démodulé $Y_1$ et délivrant un signal filtré Y,

- des moyens de reconstruction d'un signal $\hat{Y}$ et de détermination d'une erreur $e_y = Y - \hat{Y}$ entre les signaux Y et $\hat{Y}$,

les deux voies se réunissant à l'aide d'un dispositif de comparaison de phase qui reçoit les signaux X, $e_x$, Y, $e_y$ et une horloge de base H (horloge symbole récupérée), et qui délivre un signal de comparaison S, ainsi qu'une horloge d'échantillonnage à cadence variable qui reproduit l'horloge de base H en excluant certains fronts, le signal de comparaison entrant dans une bascule sous le contrôle de l'horloge d'échantillonnage, la sortie de la bascule étant réunie à un filtre amplificateur qui délivre le signal d'erreur $\varepsilon(\phi)$ de commande de l'oscillateur, la représentation des signaux en phase et en quadrature définissant les états d'une constellation.

L'invention concerne également les dispositifs où un circuit de récupération de l'onde porteuse trouve son application, tels que les dispositifs de transmission numériquement, en particulier ceux pour lesquels une information, après avoir été transmise par modulation d'une onde électromagnétique est restituée par démodulation cohérente. Ces dispositifs trouvent leur application dans les modems de transmission de données, les faisceaux hertziens, les systèmes de communications spatiales ou optiques dans le cas de liaisons hétérodynes.

Pour effectuer la démodulation cohérente, la phase de l'onde porteuse est restituée en général à l'aide d'un oscillateur placé dans une boucle de récupération de porteuse. Cet oscillateur est commandé en tension par une version filtrée du signal de sortie d'un comparateur de phase qui détecte l'erreur de phase entre l'oscillateur et l'onde porteuse d'émission.

Pour des modulations numériques à grand nombre d'états, l'écart de phase entre l'oscillateur et l'onde porteuse doit être impérativement limité à des petites valeurs. La bande de bruit de la boucle de récupération est alors réduite à l'aide d'un filtrage passe-bas étroit. Cette réduction entraîne un faible bruit de phase, et aussi une diminution considérable de la plage d'acquisition. Pour surmonter cet inconvénient on utilise des dispositifs d'aide à l'acquisition.

Parmi ces dispositifs on utilise couramment des discriminateurs de fréquence qui génèrent une tension qui dépend de l'écart de fréquence entre l'oscillateur et l'onde porteuse tel que celui décrit dans la demande de brevet français n° 2 552 959. Cette demande concerne un circuit de récupération de porteuse pour des modulations numériques de symétrie $2\pi/M$ dans lequel un échantillonnage à cadence variable de la sortie du comparateur de phase transforme celui-ci en discriminateur de fréquence. Cette propriété est obtenue par l'élimination des transitions par zéro de la sortie du comparateur de phase qui surviennent lorsque l'erreur de phase entre l'oscillateur et l'onde porteuse est égale à $\dfrac{\pi}{M} + \dfrac{2k\pi}{M}$, où k et M sont des nombres entiers.

Or en présence de modulations numériques d'amplitude de deux porteuses en quadrature à multi-états, le discriminateur de fréquence, décrit dans cette demande, présente des inconvénients, son gain se trouvant dégradé, car il subsiste sur la sortie échantillonnée du comparateur de phase des transitions par zéro qui sont prises en compte, et qui ne correspondent pas à une erreur de phase nulle. En effet, ce discriminateur de fréquence génère une horloge d'échantillonnage, à partir d'une horloge de base H, dans laquelle certains fronts actifs de cette dernière sont éliminés. Cette élimination survient lorsque l'on détecte des transitions par zéro pour lesquelles l'écart de phase entre l'oscillateur et l'onde porteuse est égal à $\dfrac{\pi}{M} + \dfrac{2k\pi}{M}$.

Mais il apparaît à l'expérience, dans des modulations de phase et d'amplitude, qu'il existe d'autres transitions par zéro à la sortie du comparateur de phase qui mettent en défaut une acquisition correcte de l'onde porteuse. Par exemple dans le cas d'une modulation MAQ 16, la sortie des comparateurs de phase couramment utilisés présentent des transitions par zéro alors que l'écart de phase est égal à $\theta$ = Arc tg 1/3 pour les états (3,1), (−1, 3), (−3, −1), (1, −3). D'autres états présentent un comportement analogue. De plus, avec un nombre d'états de modulation plus important, le nombre de ces transitions par zéro indésirables va croître, et ceci entraîne une détérioration des performances du discriminateur.

Le but de l'invention est donc d'éviter cette dégradation en supprimant la prise en compte de toutes les transitions par zéro indésirables.

Pour cela l'invention telle que définie dans le préambule est remarquable en ce que le circuit de récupération de l'onde porteuse possède un dispositif de comparaison de phase qui comprend des moyens de sélection des points reçus à l'aide de zones de sélection situées autour de certains états diagonaux dans chaque quadrant de la constellation de sorte que les cercles passant par les états non-diagonaux dans chaqeu quadrant ne coupent pas lesdites zones de sélection, et que les zones tracées autour des points de type (± 1, ± 1) ne viennent pas en contact avec les axes OX, OY de la constellation, et des moyens de génération de l'horloge d'échantillonnage dans laquelle ont été éliminés tous les fronts actifs susceptibles de valider dans la bascule les transitions par zéro du signal de comparaison de la sortie du comparateur de phase qui ne correspondent pas à un écart de phase à $2k\pi/M$, où k et M sont des nombres entiers.

Ce dispositif est basé sur la mémorisation du signe de la sortie du comparateur de phase lorsque la valeur absolue de l'écart de phase dépasse une certaine valeur. Cette mémorisation s'effectue dans une bascule dont la sortie présente une tension qui reste constante entre deux transitions par zéro reconnues valables. Cette tension constante est de même signe que l'écart de fréquence entre l'oscillateur et l'onde porteuse.

Pour effecteur la mémorisation, on définit des zones pour lesquelles l'erreur de phase à la sortie du comparateur s'annule une seule fois, le signe de la sortie du comparateur de phase restant identique au signe de l'erreur de phase.

Ce circuit de récupération de l'onde porteuse fait appel à un comparateur de phase qui possède les propriétés suivantes:

– sa caractéristique s'annule pour une erreur de phase nulle;

– sa caractéristique est périodique de période $2\pi/M$ où M est l'ordre de symétrie de la modulation.

L'invention trouve son application pour des modulations numériques de symétrie de phase $2\pi/M$ où M est l'ordre de symétrie de la constellation. Ainsi, une modulation de phase à 4 états présente une symétrie d'ordre 4, pour une modulation de phase à 8 états la symétrie est d'ordre 8, pour une modulation de phase et d'amplitude de deux porteuses en quadrature MAQ 16, la symétrie est d'ordre 4.

Mais l'invention présente ses avantages déterminants dans le cas des modulations d'amplitude et de phase pour lesquelles les écarts de phase entre certains points de la constellation sont inférieurs à la symétrie $2\pi/M$. Ainsi en modulation MAQ 16 la symétrie est de $\pi/2$, mais l'écart de phase entre les états (1, 1) et (1, 3) est de $\pi/4$ - arc (tg. 1/3) donc inférieur à $\pi/2$.

Au cours de la période d'acquisition de la porteuse, l'onde modulée numériquement va pouvoir présenter tous les points de la constellation. L'invention élimine donc tous les points reçus qui sont susceptibles de provoquer une acquisition erronée.

Ainsi, le circuit de récupération de l'onde porteuse, selon l'invention, possède des moyens de sélection des points reçus à l'aide de zones situées autour de certains états de la constellation.

Cette sélection s'effectue en déterminant l'appartenance ou la non-appartenance des points reçus à des zones possédant les propiétés suivantes:

– tout point reçu dans ces zones présente un écart de phase avec le point émis, tel que la valeur absolue de cet écart de phase reste inférieure, à $2k\pi/M$ près, à une valeur choisie, ce qui permet d'éliminer les transitions par zéro à $k\pi/M$;

– tout signal reconstruit à partir d'un point reçu dans ces zones est identique à $2k\pi/M$ près, au signal émis correspondant.

Ainsi l'information prise en compte est seulement celle fournie par les points reçus dans ces zones. En modulation MAQ ces zones peuvent être formées de carrés centrés sur des états diagonaux de la modulation. D'une manière plus générale, les zones peuvent être constituées d'un contour fermé, borné en X et Y, entourant ces états diagonaux.

Pour déterminer l'appartenance à ces zones, puis la prise en compte de l'information y afférente, l'invention construit un dispositif de comparaison de phase qui s'insère dans un circuit de récupération d'une onde porteuse. Pour cela l'onde modulée numériquement est introduite simultanément sur deux démodulateurs, recevant également l'un la sortie de l'oscillateur et l'autre cette même sortie mais après avoir traversé un déphaseur de $\pi/2$ et délivrant respectivement les signaux démodulés $X_1$ et $Y_1$. Ceux-ci sont filtrés et fournissent respectivement les signaux X (en phase) et Y (en quadrature) à partir desquels des signaux reconstruits $\hat{X}$ et $\hat{Y}$ sont obtenus. Les erreurs $e_x$ et $e_y$ entre les signaux filtrés et reconstruits, ainsi que les signaux X et Y, sont introduits dans le dispositif de comparaison de phase qui délivre un signal binaire indiquant le signe de la caractéristique du comparateur de phase pour l'angle $\phi$ apparaissant entre l'onde modulée reçue et l'onde de l'oscillateur. Ce signal binaire est introduit dans une bascule sous le contrôle de l'horloge d'échantillonnage qui ne comprend que les fronts actifs souhaités. La sortie de la bascule est filtrée puis amplifiée pour délivrer le signal de commande $\varepsilon(\phi)$ pour l'oscillateur. Le dispositif de comparaison génère un signal $P_z$ caractérisant la sélection des zones qui sert à construire l'horloge d'échantillonnage.

L'invention sera mieux comprise à l'aide des dessins annexés, donnés à titre d'exemples non limitatifs, et qui représentent:

Figure 1 la représentation, dans un quart de plan, de la constellation d'une onde MAQ 16.

Figure 2 la représentation, dans un quart de plan, de la constellation d'une onde MAQ 64.

Figure 3 une représentation de la caractéristique du comparateur de phase et des variations, avec la phase, du signal de sortie du comparateur de phase avant et après mémorisation dans une bascule.

Figure 4 une représentation des variations, avec la phase, du signal de sortie du comparateur de phase, pour certains états de la constellation en MAQ 16.

Figure 5 un schéma-bloc du circuit de récupération de l'onde porteuse selon l'invention.

Figure 6 un schéma logique du dispositif de comparaison de phase selon l'invention dans le cas de zones carrées centrées sur les états de la constellation.

Figure 7 un schéma logique du dispositif de comparaison de phase selon l'invention dans le cas de zones carrées excentrées sur les états de la constellation.

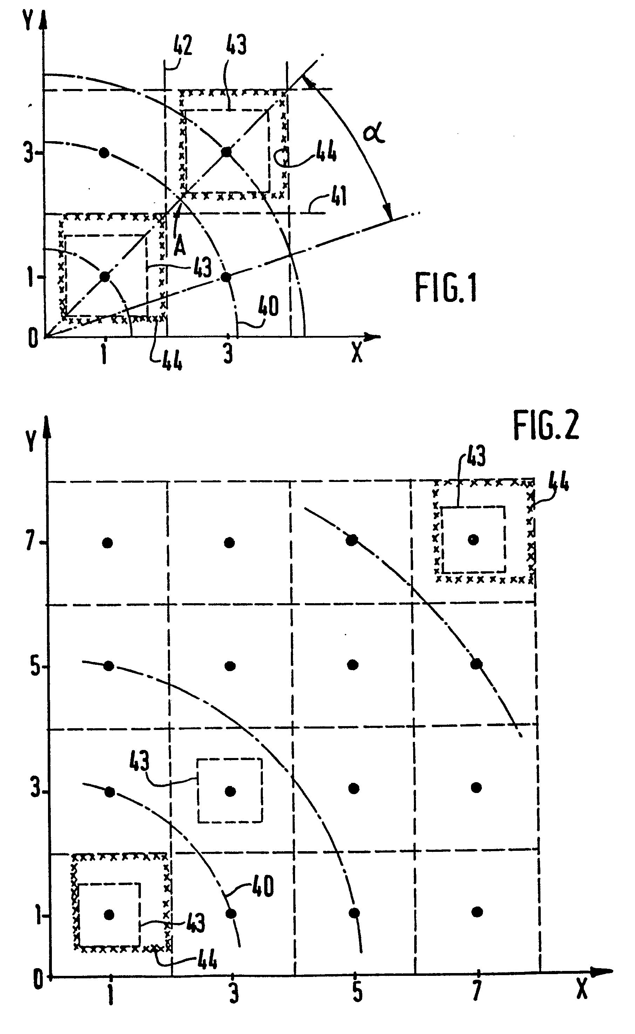

La figure 1 représente dans un quart de plan XOY la partie de constellation MAQ 16. Elle présente quatre états (1, 1), (3, 1), (1, 3), (3, 3) dans ce quart de plan. Pour le plan total cette constellation a une

symétrie $\dfrac{2\pi}{M} = \dfrac{\pi}{2}$. Elle présente un écart de phase

minimal tel que $\alpha = \dfrac{\pi}{4}$ - Arc tg 1/3 $< \dfrac{\pi}{2}$.

Les droites 41, 42 et les axes OX et OY définissent les zones de décision pour les états du quart de plan représentés sur la figure 1.

Selon la variation de phase de l'onde modulée incidente par rapport à l'oscillateur, pour un état particulier de la constellation, le point reçu va se déplacer sur un cercle centré en 0 et passant par l'état particulier. Sur le cercle 40 apparaît une position A qui correspond à la distance la plus faible entre le cercle 40 et l'état (3, 3). Un état détecté se situant en A est interprété comme étant un état (3, 3) alors qu'il s'agit d'un état (3, 1) ou d'un état (1, 3) avec un écart de phase. Pour cela l'invention définit autour de chaque état une zone d'acquisition 43 qui n'entre pas en contact avec le cercle 40 pour l'exemple choisi. Dans le cas de la modulation MAQ 16, les états sélectionnés en vue de l'acquisition sont les états (1, 1) et 3, 3) car en effet l'écart de phase entre les 4 états de type $(\pm 1, \pm 1)$, ainsi qu'entre les 4 états de type $(\pm 3, \pm 3)$, est de $\pi/2$. Par contre, entre les 8 états de type $(\pm 1, \pm 3)$ et $(\pm 3, \pm 1)$ l'écart de phase minimal est de 2.Arc tg(1/3) = 36°87. Une erreur de phase $\beta$, entre l'émission et la réception, supérieure à environ 19° par exemple, ramène un point (+ 1, + 3) dans la zone de décision du point (−1, + 3). Par conséquent avec les points $(\pm 1, \pm 3)$ et $(\pm 3, \pm 1)$ une erreur de phase de $\beta$ ne peut être distinguée d'une erreur 2.(Arc tg1/3)-$\beta$ ou d'une erreur de phase 2$\alpha$-$\beta$ (pour $\alpha$, voir figure 1). Lors de l'émission d'un état (+3, + 1) et pour une erreur de phase de +48° par exemple, le point peut être détecté comme un état (+ 1, + 3) avec une erreur de phase estimée à −5°. De même pour un état (3, −1), avec une erreur de phase de +48° par exemple, le point peut être détecté comme un état (+3, + 1) avec une erreur de phase estimée à +11°. Ainsi, si on se fixe de prendre en compte l'erreur de phase, modulo $\pi/2$, seulement lorsqu'elle est inférieure à 15° par exemple, il est clair que l'on ne peut pas prendre en compte les états non-diagonaux, car il serait impossible de déterminer si l'erreur de phase détectée est à l'intérieur de l'intervalle prédéterminé.

L'invention sélectionne donc les états qui présentent la même symétrie que la modulation elle-même et définit autour de chaque état une zone où l'acquisition peut être effectuée. La zone d'acquisition 43 est centrée sur l'état sélectionné. Par contre, la zone d'acquisition 44 est excentrée.

La figure 2 indique le même type de représentation pour une modulation MAQ 64. Dans ce cas les problèmes d'acquisition sont beaucoup plus nombreux du fait de l'existence d'un grand nombre d'états qui peuvent conduire à une perturbation du mécanisme d'acquisition. Dans ce cas, les états sélectionnés sont les états (1, 1), (3, 3), (7, 7) qui possèdent un ordre de symétrie identique à celui de la modulation elle-même. L'état (5, 5) ne peut pas être sélectionné car il se trouve sur le cercle qui passe par les états (1, 7) et (7, 1). Autour de chacun des états sélectionnés on définit une zone d'acquisition 43 ou 44 dans laquelle l'acquisition doit s'effectuer, cette zone d'acquisition n'entrant pas en contact avec les cercles passant par les autres états.

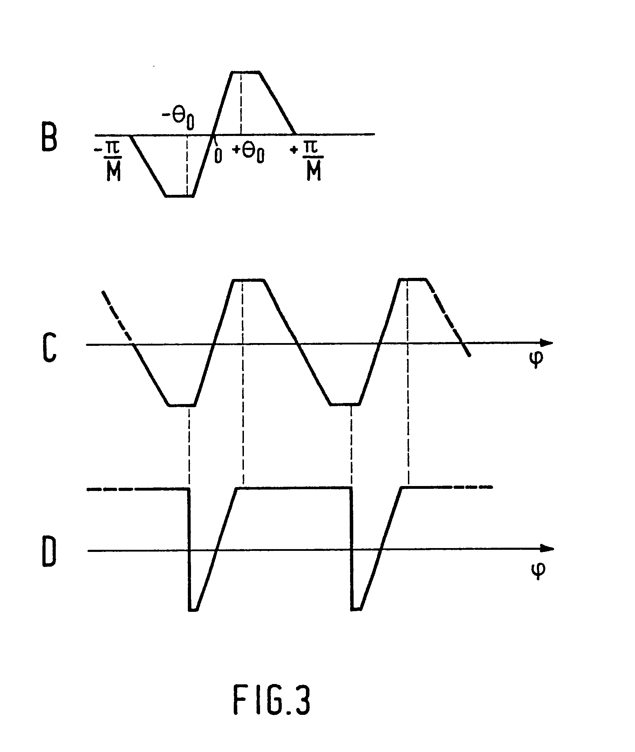

La figure 3 représente en B les caractéristiques d'un comparateur de phase pour une phase comprise entre −$\pi$/M et +$\pi$/M. De part et d'autre du point o (écart de phase nul), le comparateur de phase délivre une tension fonction de l'écart de phase qui permet d'asservir la fréquence de l'oscillateur. La tension de sortie du comparateur est représentée en C. La valeur moyenne de cette tension de sortie est nulle. Pour effectuer la correction de fréquence de l'oscillateur, on mémorise la valeur de la tension de sortie du comparateur de phase à l'aide de moyens de sélection et d'acquisition qui caractérisent l'invention. Lorsque la valeur absolue de l'écart de phase dépasse une valeur 80, ce qui correspond au franchissement de la zone d'acquisition choisie, un circuit d'acquisition mémorise l'état du signal de sortie du comparateur. Un tel signal mémorisé est représenté en D, sa valeur moyenne n'est plus nulle. Elle permet d'effectuer la correction de fréquence de l'oscillateur. Les courbes C et D de la figure 3 sont représentatives d'un écart de fréquence positif c'est-à-dire une fréquence de porteuse d'onde modulée plus grande que la fréquence de l'oscillateur. Pour un écart de fréquence négatif les courbes C et D présentent une allure inversée.

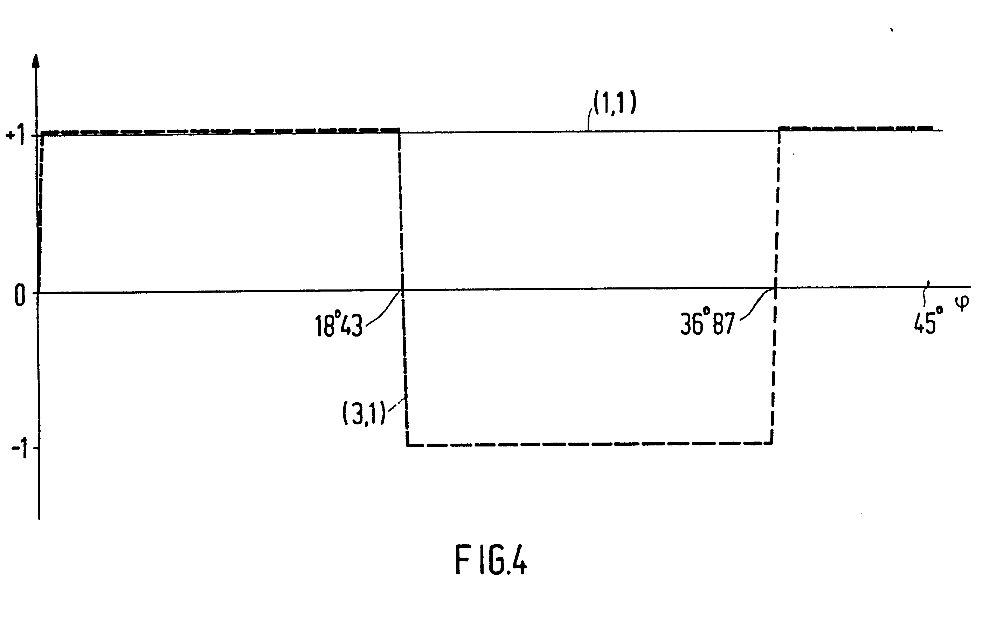

La figure 4 représente, dans le cas d'une modulation MAQ 16, l'état du signal de sortie d'un comparateur de phase pour un écart de phase variant de 0 à $\pi/4$. Ce domaine est suffisant car la caractéristique du comparateur est périodique de $\pi/2$ et est impaire. Le comparateur considéré est un comparateur d'un type classique qui délivre un signal de sortie S tel que $S = -\mathrm{sgn}(e_y).\mathrm{sgn}(X)$ si $\mathrm{sgn}(e_y).\mathrm{sgn}(X)$ est de signe opposé à $\mathrm{sgn}(e_x).\mathrm{sgn}(Y)$, et tel que S garde la valeur présente à l'instant précédent dans le cas contraire. Un tel comparateur va délivrer un signal qui, examiné sur une demi-période (0,$\pi/4$), va présenter certaines singularités selon l'état de la constellation étudié. Ainsi en limitant l'analyse à la demi-période (0,$\pi/4$), soit la moitié de la symétrie , on constate que certains états vont conduire à des transitions par zéro de la sortie du comparateur mais pour lesquelles l'erreur de phase n'est pas nulle. Ainsi la figure 4 montre qu'un état (3, 1) peut conduire à des transitions par zéro de la sortie du comparateur qui doivent être éliminées pour effectuer l'acquisition.

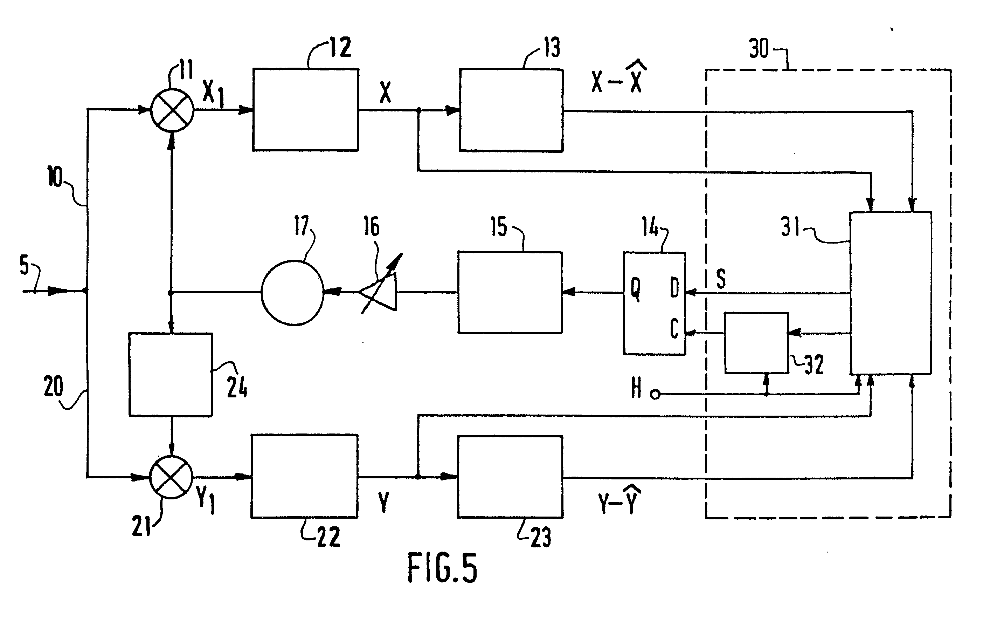

La figure 5 représente le schéma-bloc du cicut de récupération de l'onde porteuse. L'onde modulée numériquement arrive sur la connexion d'entrée 5 et se subdivise en deux voies 10 et 20 respectivement en phase et en quadrature avec l'onde de l'oscillateur 17. Celui-ci délivre son signal directement au démodulateur 11 de la voie en phase, et également au démodulateur 21 de la voie en quadrature à travers le déphaseur de $\pi/2$ 24. Les sorties des démodulateurs 11 et 21 sont filtrées respectivement dans les filtres passe-bas 12 et 22 ayant pour signal de sortie respectivement X et Y. Ces signaux pénètrent dans des circuits de reconstruction, respectivement 13 et 23, qui délivrent respectivement les erreurs $e_x = X - \hat{X}$ et

$e_y = Y - \hat{Y}$ entre les signaux filtrés X et Y et les signaux reconstruits $\hat{X}$ et $\hat{Y}$.

Les signaux d'erreur $e_x$ et $e_y$ ainsi que les signaux filtrés X et Y pénètrent dans le dispositf de comparaison de phase 30, qui reçoit également l'horloge de base H et qui délivre le signal binaire de comparaison S et l'horloge d'échantillonnage. Ces deux signaux entrent dans une bascule 14 dont l'entrée des données reçoit le signal de comparaison S et l'entrée d'horloge reçoit l'horloge d'échantillonnage issue des moyens de sélection et de comparaison 31 et des moyens de génération 32 constituant le dispositif de comparaison de phase 30 qui contient l'invention. Le signal de sortie de la bascule 14 passe dans un filtre passe-bas 15 puis dans un amplificateur 16 pour fournir le signal de commande $\varepsilon(\phi)$ qui contrôle l'oscillateur 17.

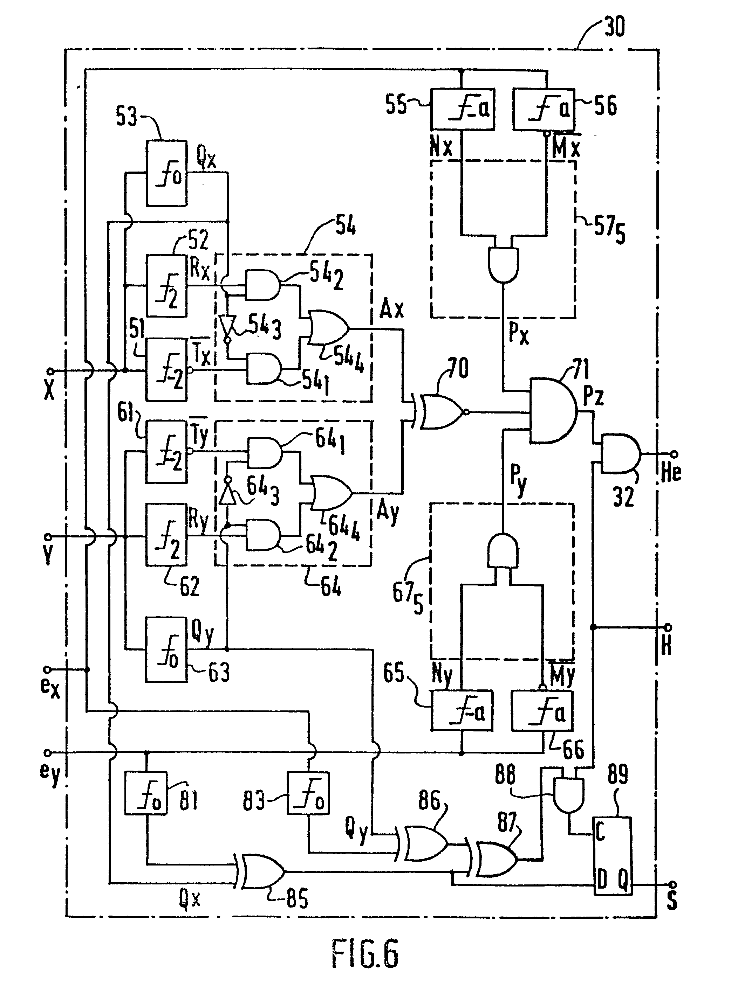

La figure 6 représente le schéma logique d'un exemple de réalisation du dispositif de comparaison de phase 30 selon l'invention dans le cas de zones carrées centrées sur les états diagonaux d'une constellation MAQ 16. Il reçoit en entrée les signaux X, Y, $e_x = X - \hat{X}$, $e_y = Y - \hat{Y}$ et l'horloge de base H. Il délivre le signal S et l'horloge d'échantillonnage He. Le signal Y entre dans:

– un comparateur 61 à seuil −2 qui délivre le signal $\overline{T}_y$

– un comparateur 62 à seuil 2 qui délivre le signal $R_y$

– un comparateur 63 à seuil 0 qui délivre le signal $Q_y$.

Les signaux $\overline{T}_y$, $R_y$, $Q_y$ entrent dans un circuit de sélection 64 qui effectue l'opération logique définie par $A_y = R_y \cdot Q_y + \overline{T}_y \cdot \overline{Q}_y$, où le symbole (·) représente la fonction logique ET et le symbole (+) représente la fonction logique OU.

Ceci est effectué à l'aide d'une porte ET $64_2$ qui reçoit $R_y$ et $Q_y$, d'un inverseur $64_3$ qui délivre $\overline{Q}_y$, signal inverse du signal d'entrée $Q_y$, une porte ET $64_1$ qui reçoit les signaux $\overline{T}_y$ et $\overline{Q}_y$, les sorties des portes ET $64_1$ et ET $64_2$ entrant dans une porte OU $64_4$ qui délivre le signal $A_y$.

Le signal X est traité de la même façon que le signal Y. Il entre dans:

– un comparateur 51 à seuil −2 qui délivre le signal $\overline{T}_x$

– un comparateur 52 à seuil 2 qui délivre le signal $R_x$

– un comparateur 53 à seuil 0 qui délivre le signal $Q_x$.

Les signaux $\overline{T}_x$, $R_x$ et $Q_x$ entrent dans un circuit de sélection 54 qui effectue l'opération logique définie par $A_x = R_x \cdot Q_x + \overline{T}_x \cdot \overline{Q}_x$.

Ceci est effectué à l'aide d'une porte ET $54_2$ qui reçoit $R_x$ et $Q_x$, d'un inverseur $54_3$ qui délivre $\overline{Q}_x$, signal inverse du signal d'entrée $Q_x$, une porte ET $54_1$ qui reçoit les signaux $\overline{T}_x$ et $\overline{Q}_x$, les sorties des portes ET $54_1$ et $54_2$ entrant dans une porte OU $54_4$ qui délivre le signal $A_x$.

D'autre part le signal $e_y$ entre dans:

– un comparateur 65 à seuil −a qui délivre le signal $N_y$

– un comparateur 66 à seuil a qui délivre le signal $\overline{M}_y$.

Les signaux $N_y$ et $\overline{M}_y$ entrent dans une porte ET $67_5$ qui effectue l'opération logique définie par $P_y = N_y \cdot \overline{M}_y$.

De la même façon le signal $e_x$ entre dans:

– un comparateur 55 à seuil −a qui délivre le signal $N_x$

– un comparateur 56 à seuil a qui délivre le signal $\overline{M}_x$.

Les signaux $N_x$ et $\overline{M}_x$ entrent dans une porte ET $57_5$ qui effectue l'opération logique définie par $P_x = N_x \cdot \overline{M}_x$.

Les signaux $A_x$ et $A_y$ entrent dans une porte NON-OU-exclusif 70 dont la sortie entre, avec les signaux $P_x$ et $P_y$, dans une porte ET 71 qui délivre le signal $P_z$. Ce signal $P_z$ indique si le point (X, Y) reçu appartient ou n'appartient pas aux zones particulières que l'on désire détecter.

Le signal $P_z$ et l'horloge de base H entrent dans une porte ET 32 qui délivre l'horloge d'échantillonnage He.

D'autre part on détermine le signe des signaux $e_x$, $e_y$, X, Y afin de déterminer, à un instant donné, le signal de sortie S tel que:

$$S = sgn(e_y) \cdot sgn(X)$$

si $e_x \cdot Y$ est de signe opposé à $e_y \cdot X$, et tel que S garde la valeur de l'instant précédent dans le cas contraire.

Pour cela on fait entrer

– le signal $e_y$ dans un comparateur 81

– le signal $e_x$ dans un comparateur 83.

Les sorties des comparateurs 81 et 53 entrent dans une porte OU-exclusif 85 et les sorties des comparateurs 83 et 63 entrent dans une porte OU-exclusif 86. Les sorties des portes 85 et 86 entrent dans une porte OU-exclusif 87 dont la sortie entre, avec l'horloge de base H, dans une porte ET 88 qui délivre un signal qui sert d'horloge à une bascule 89 dont les données d'entrée sont issues de la sortie de la porte OU-exclusif 85. Cette bascule 89 délivre un signal de sortie S qui entre sur l'entrée des données de la bascule 14 de la figure 5, l'horloge de cette dernière étant constituée par l'horloge d'échantillonnage.

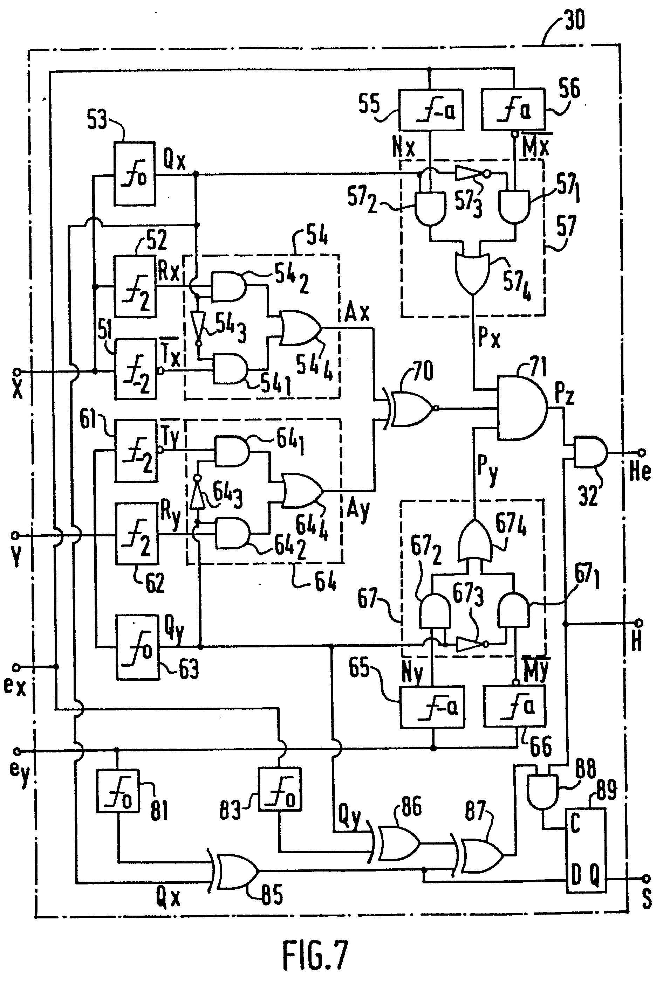

La figure 7 représente le schéma logique d'un exemple de réalisation du dispositif de comparaison de phase 30, selon l'invention, dans le cas de zones excentrées sur les états diagonaux d'une constellation MAQ 16.

Une première différence se situe dans le fait que les signaux $N_y$, $\overline{M}_y$ et $Q_y$ entrent dans un circuit de sélection 67 qui effectue l'opération logique définie par:

$$P_y = N_y \cdot Q_y + \overline{M}_y \cdot \overline{Q}_y.$$

Ceci est effectué à l'aide d'une porte ET $67_2$ qui reçoit $N_y$ et $Q_y$, d'un inverseur $67_3$ qui délivre $\overline{Q}_y$, signal inverse du signal d'entrée $Q_y$, une porte ET $67_1$ qui reçoit les signaux $\overline{M}_y$ et $\overline{Q}_y$, les sorties des portes ET $67_1$ et $67_2$ entrant dans une porte OU $67_4$ qui délivre le signal $P_y$.

Une seconde différence se situe dans le fait que les signaux $N_x$, $\overline{M}_x$ et $Q_x$ entrent dans un circuit de sélection 57 qui effectue l'opération logique définie par:

$$P_x = N_x \cdot Q_x + \overline{M}_x \cdot \overline{Q}_x.$$

Ceci est effectué à l'aide d'une porte ET $57_2$ qui reçoit $N_x$ et $Q_x$, d'un inverseur $57_3$ qui délivre $\overline{Q}_x$, signal inverse du signal d'entrée $Q_x$, une porte ET $57_1$ qui reçoit les signaux $\overline{M}_x$ et $\overline{Q}_x$, les sorties des portes ET $57_1$ et $57_2$ entrant dans une porte OU $57_4$ qui délivre le signal $P_x$.

Tous les signaux sont ensuite traités de manière analogue à celle utilisée pour la figure 6.

Bien évidemment les schémas logiques donnés sur les figures 6 et 7 sont des exemples non limitatifs et tout autre schéma logique correspondant à l'objet de l'invention en fait également partie.

## Revendications

1. Circuit de récupération de l'onde porteuse d'une onde modulée numériquement de symétrie de phase $2\pi/M$, où M est l'ordre de la symétrie, muni de moyens d'acquisition automatiques et rapides comprenant un oscillateur commandable en tension (17) ayant une sortie délivrant ladite onde porteuse et une entrée de commande sur laquelle est appliqué un signal d'erreur $\varepsilon(\phi)$ afin de modifier la phase de l'oscillateur (17) et l'asservir à celle de l'onde modulée numériquement, celle-ci étant introduite:

— sur une première voie (10) comprenant en série:

- un démodulateur (11) recevant l'onde modulée et la sortie de l'oscillateur, et délivrant un signal démodulé $X_1$,

- un filtre passe-bas (12) agissant sur le signal démodulé $X_1$ et délivrant un signal filtré X,

- des moyens de reconstruction (13) d'un signal $\hat{X}$ et de détermination de l'erreur $e_x = X - \hat{X}$ entre les signaux X et $\hat{X}$,

— sur une seconde voie (20) comprenant en série:

- un déphaseur (24) à 90° du signal de l'oscillateur

- un démodulateur (21) recevant l'onde modulée et la sortie du déphaseur (24) et délivrant un signal démodulé $Y_1$,

- un filtre passe-bas (22) agissant sur le signal démodulé $Y_1$ et délivrant un signal filtré Y,

- des moyens de reconstruction (23) d'un signal $\hat{Y}$ et de détermination d'une erreur $e_y = Y - \hat{Y}$ entre les signaux Y et $\hat{Y}$,

les deux voies (10, 20) se réunissant à l'aide d'un dispositif de comparaison de phase (30) qui reçoit les signaux X, $e_x$, Y, $e_y$ et une horloge de base H (horloge symbole récupérée), et qui délivre un signal de comparaison S, ainsi qu'une horloge d'échantillonnage à cadence variable qui reproduit l'horloge de base H en excluant certains fronts, le signal de comparaison entrant dans une bascule (14) sous le contrôle de l'horloge d'échantillonnage, la sortie de la bascule étant réunie à un filtre amplificateur (15, 16) qui délivre le signal d'erreur $\varepsilon(\phi)$ de commande de l'oscillateur, la représentation des signaux en phase et en quadrature définissant les états d'une constellation, caractérisé en ce que le dispositif de comparaison de phase comprend des moyens de sélection des points reçus à l'aide de zones de sélection situées autour de certains états diagonaux dans chaque quadrant de la constellation de sorte que les cercles passant par les états non-diagonaux dans chaque quadrant ne coupent pas lesdites zones de sélection, et que les zones tracées autour des points de type ($\pm 1$, $\pm 1$) ne viennent pas en contact avec les axes OX, OY de la constellation, et des moyens de génération de l'horloge d'échantillonnage dans laquelle ont été éliminés tous les fronts actifs susceptibles de valider dans la bascule les transitions par zéro du signal de comparaison de la sortie du comparateur de phase qui ne correspondent pas à un écart de phase égale à $2k\pi/M$, où k et M sont des nombres entiers.

2. Circuit de récupération de l'onde porteuse selon la revendication 1, caractérisé en ce que lesdits moyens de sélection des points reçus comprennent des moyens de comparaison qui comparent les coordonnées des points reçus à des seuils préalablement établis.

3. Circuit de récupération de l'onde porteuse selon la revendication 2, caractérisé en ce que les seuils préalablement établis sont déterminés de telle sorte que:

— tout point reçu dans les zones situées autour desdits certains états diagonaux présente un écart de phase avec le point émis tel que la valeur absolue de cet écart de phase reste inférieure, à $2k\pi/M$ près, à une valeur choisie.

4. Circuit de récupération de l'onde porteuse d'une onde modulée numériquement de symétrie de phase $2\pi/M$ selon une des revendications 1 à 3, caractérisé en ce que les moyens de sélection des points reçus et les moyens de génération de l'horloge d'échantillonnage comprennent:

— sur la voie en phase,

— deux comparateurs d'amplitude comparant l'erreur $e_x = X - \hat{X}$ respectivement à des seuils $\underline{a}$ et $-\underline{a}$ et délivrant respectivement des signaux $\overline{M}_x$ et $N_x$ à un niveau logique 1 lorsque respectivement l'erreur $e_x$ est supérieure à $\underline{a}$ ou inférieure à $-\underline{a}$,

— trois comparateurs d'amplitude comparant le signal X respectivement aux seuils 0, 2 et $-2$ et délivrant respectivement des signaux $Q_x$, $R_x$ et $\overline{T}_x$ à un niveau logique 1 lorsque le signal X est respectivement supérieur aux seuils pour les deux premiers et inférieur au seuil pour le troisième,

- un premier circuit de sélection délivrant un signal $P_x$ tel que $P_x = N_x.\overline{M}_x$

- un second circuit de sélection délivrant un signal $A_x$ tel que $A_x = R_x.Q_x + \overline{T}_x.\overline{Q}_x$, avec le symbole (.) représentant la fonction logique ET et le symbole (+) représentant la fonction logique OU,

et sur la voie en quadrature,

— deux comparateurs d'amplitude comparant l'erreur $e_y = Y - \hat{Y}$ respectivement aux seuils $\underline{a}$ et $-\underline{a}$ et délivrant respectivement des signaux $\overline{M}_y$ et $N_y$ à un niveau logique 1 lorsque respectivement l'erreur $e_y$ est supérieure à $\underline{a}$ ou inférieure à $-\underline{a}$,

— trois comparateurs d'amplitude comparant le signal Y respectivement aux seuils 0, 2 et $-2$, et délivrant respectivement des signaux $Q_y$, $R_y$ et $\overline{T}_y$ à un niveau logique 1 lorsque le signal Y est respectivement supérieur aux seuils pour les deux premiers et inférieur au seuil pour le troisième,

- un troisième circuit de sélection délivrant un signal $P_y$ tel que $P_y = N_y.\overline{M}_y$

- un quatrième circuit de sélection délivrant un signal $A_y$ tel que $A_y = R_y.Q_y + \overline{T_y}.\overline{Q_y}$

et un circuit NON-OU-exclusif recevant en entrée les signaux $A_x$ et $A_y$,

et un circuit ET recevant la sortie du circuit NON-OU-exclusif et les signaux $P_x$ et $P_y$, et délivrant le signal $P_z$ qui entre dans un circuit ET ainsi que l'horloge de base H pour délivrer l'horloge d'echantillonnage.

5. Circuit de récupération de l'onde porteuse d'une onde modulée numériquement de symétrie de phase $2\pi/M$ selon une des revendications 1 à 3, caractérisé en ce que les moyens de sélection des points reçus et les moyens de génération de l'horloge d'échantillonnage comprennent:

sur la voie en phase,

— deux comparateurs d'amplitude comparant l'erreur $e_x = X - \hat{X}$ respectivement à des seuils $\underline{a}$ et $-\underline{a}$ et délivrant respectivement des signaux $\overline{M_x}$ et $N_x$ à un niveau logique 1 lorsque respectivement l'erreur $e_x$ est supérieure à $\underline{a}$ ou inférieure à $-\underline{a}$,

— trois comparateus d'amplitude comparant le signal X respectivement aux seuils 0, 2 et $-2$ et délivrant respectivement des signaux $Q_x$, $R_x$ et $T_x$ à un niveau logique 1 lorsque le signal X est respectivement supérieur aux seuils pour les deux premiers et inférieur au seuils pour le troisième,

- un circuit de sélection délivrant un signal $P_x$ tel que $P_x = N_x.Q_x + \overline{M_x}.\overline{Q_x}$

- un autre circuit de sélection délivrant un signal $A_x$ tel que $A_x = R_x.Q_x + \overline{T_x}.\overline{Q_x}$, avec le symbole (.) représentant la fonction logique ET et le symbole ( + ) représentant la fonction logique OU,

et sur la voi en quadrature,

— deux comparateurs d'amplitude comparant l'erreur $e_y = Y - \hat{Y}$ respectivement aux seuils $\underline{a}$ et $-\underline{a}$ et délivrant respectivement des signaux $M_y$ et $N_y$ à un niveau logique 1 lorsque respectivement l'erreur $e_y$ est supérieure à $\underline{a}$ ou inférieure à $-\underline{a}$,

— trois comparateurs d'amplitude comparant le signal Y respectivement aux seuils 0, 2 et $-2$ et délivrant respectivement des signaux $Q_y$, $R_y$ et $\overline{T_y}$ à un niveau logique 1 lorsque le signal Y est respectivement supérieur aux seuils pour les deux premiers et inférieur au seuil pour le troisième,

- un autre circuit de sélection délivrant un signal $P_y$ tel que $P_y = N_y.Q_y + \overline{M_y}.\overline{Q_y}$

- un autre circuit de sélection délivrant un signal $A_y$ tel que $A_y = R_y.Q_y + \overline{T_y}.\overline{Q_y}$

et un circuit NON-OU-exclusif recevant en entrée les signaux $A_x$ et $A_y$,

et un circuit ET recevant la sortie du circuit NON-OU-exclusif et les signaux $P_x$ et $P_y$, et délivrant le signal $P_z$ qui entre dans un circuit ET ainsi que l'horloge de base H pour délivrer l'horloge d'échantillonnage.

## Patentansprüche

1. Schaltungsanordnung zum Rückgewinnen des Trägers einer digital modulierten Welle mit einer (Phasen)-Symmetrie $2\pi/M$, wobei M die Symmetrieordnung ist, mit automatischen und schnellen Erfassungsmitteln mit einem spannungsgesteuerten Oszillator (17), der einen Ausgang hat, der den genannten Träger liefert, sowie einen Steuereingang, dem ein

Fehlersignal $\varepsilon(\phi)$ zugeführt wird, um die Phase des Oszillators (17) zu ändern und sie auf die der digital modulierten Welle einzustellen, wobei diese Welle in die folgenden Elemente eingeführt wird:

— über eine erste Strecke (10) mit den folgenden reihengeschalteten Elementen:

- einem Demodulator (11), der die modulierte Welle und das Ausgangssignal des Oszillators erhält und der ein demoduliertes Signal $X_1$ liefert,

- einem Tiefpaßfilter (12), das auf das demodulierte Signal $X_1$ reagiert und ein gefiltertes Signal X liefert,

- Mitteln (13) zum Rekonstruieren eines Signals $\hat{X}$ und zum Ermitteln des Fehlers $e_x = X - \hat{X}$ zwischen den Signalen X und $\hat{X}$,

— über eine zweite Strecke (20) mit den folgenden reihengeschalteten Elementen:

- einem 90°-Phasenverschieber (24) für das Oszillatorsignal

- einem Demodulator (21), der die demodulierte Welle und das Ausgangssignal des Phasenverschiebers (24) erhält und ein demoduliertes Signal $Y_1$ liefert,

- einem Tiefpaßfilter (22), das auf das demodulierte Signal $Y_1$ reagiert und ein gefiltertes Signal Y liefert,

- Mitteln (23) zum Rekonstruieren eines Signals $\hat{Y}$ und zum Ermitteln eines Fehlers $e_y = Y - \hat{Y}$ zwischen den Signalen Y und $\hat{Y}$,

wobei die beiden Strecken (10, 20) mit Hilfe einer Phasenvergleichsschaltung (30) miteinander verbunden werden, welche die Signale X, $e_x$, Y, $e_y$ sowie ein Basis-Taktsignal H (zurückgewonnenes Symboltaktsignal) erhält, und die ein Vergleichssignal S liefert, ebenso wie ein Abtasttaktsignal mit veränderlicher Rate, die das Basis-Taktsignal H unter Ausschluß bestimmter Flanken reproduziert, wobei das Vergleichssignal einer bistabilen Kippschaltung (14) unter Ansteuerung des Abtasttaktsignals, zugeführt wird, wobei das Ausgangssignal der Kippschaltung einem Verstärkungsfilter (15, 16) zugeführt wird, das das Fehlersignal $\varepsilon(\phi)$ zur Steuerung des Oszillators liefert, wobei die In-Phase/Quadratur-Phasen-Darstellung der Signale die Zustände einer Konstellation definieren, dadurch gekennzeichnet, daß die Phasenvergleichsschaltung (20) Mittel aufweist zum Selektieren von empfangenen Punkten mit Hilfe von Selektionszonen, die um bestimmte diagonale Zustände in jedem Quadranten der Konstellation liegen, und zwar derart, daß die Kreise, die durch die nicht-diagonalen Zustände in jedem Quadranten gehen, die genannten Selektionszonen nicht durchschneiden, und daß die um die Punkte vom Typ ($\pm$ 1, $\pm$ 1) gegliederten Zonen die Achsen OX, OY der Konstellation nicht berühren, sowie Mittel zum Erzeugen des Abtastraktsignals, in dem alle aktiven Flanken eliminiert worden sind, die in der Lage sind, in der Kippschaltung diejenigen Nulldurchgänge des Vergleichssignals vom Ausgang der Phasenvergleichsschaltung geltend zu machen, die nicht einem Phasenunterschied gleich $2k\pi/M$ entsprechen, wobei k und M ganze Zahlen sind.

2. Trägerrückgewinnungsschaltung nach Anspruch 1, dadurch gekennzeichnet, daß die genannten Mittel zum Selektieren der empfangenen Punkte Vergleichsmittel aufweisen, welche die Koordinaten der empfangenen Punkte mit vorbestimmten Schwellen vergleichen.

3. Trägerrückgewinnungsschaltung nach Anspruch 2, dadurch gekennzeichnet, daß die vorbestimmten Schwellen derart bestimmt werden, daß:

— jeder empfangene Punkt in den um die genannten bestimmten diagonalen Zustände liegenden Zonen einen derartigen Phasenunterschied zu dem ausgesendeten Punkt darstellt, daß der Absolutwert dieses Phasenunterschiedes bis auf $2k\pi/M$ unterhalb eines gewählten Wertes bleibt.

4. Schaltungsanordnung zum Rückgewinnen des Trägers einer digital modulierten Welle mit einer (Phasen)-Symmetrie $2\pi/M$, nach einem der Ansprüche 1 bis 3, dadurch gekennzeichnet, daß die Mittel zum Selektieren der empfangenen Punkte und die Mittel zum Erzeugen des Abtasttaktsignals die folgenden Elemente aufweisen:

in der In-Phasen-Strecke:

— zwei Amplitudenvergleicher, die den Fehler $e_x$ = X - $\hat{X}$ mit den Schwellen $\underline{a}$ bzw. $-\underline{a}$ vergleichen, und Signale $\overline{M}_x$ bzw. $N_x$ mit einem logischen Pegel 1 liefern, wenn der Fehler $e_x$ größer ist als $\underline{a}$ bzw. niedriger ist als $-\underline{a}$,

— drei Amplitudenvergleicher, die das Signal X mit den Schwellen 0, 2 bzw. −2 vergleichen und Signale $Q_x$, $R_x$ bzw. $\overline{T}_x$ mit einem logischen Pegel 1 liefern, wenn das Signal X größer ist als die Schwellen für die zwei ersten Vergleicher bzw. niedriger ist als die Schwelle für den dritten Vergleicher,

- wobei ein erster Selektionskreis ein Signal $P_x$ liefert, so daß $P_x = N_x.\overline{M}_x$ ist,

- wobei ein zweiter Selektionskreis ein Signal $A_x$ liefert, so daß $A_x = R_x.Q_x + \overline{T}_x.\overline{Q}_x$ ist, wobei das Zeichen (.) die logische Funktion UND darstellt und wobei das Zeichen ( + ) die logische Funktion ODER darstellt,

und in der Quadratur-Phasen-Strecke,

— zwei Amplitudenvergleicher, die den Fehler $e_y$ = Y - $\hat{Y}$ mit den Schwellen $\underline{a}$ bzw $-\underline{a}$ vergleichen und Signale $\overline{M}_y$ bzw. $N_y$ mit einem logischen Pegel 1 liefern, wenn der Fehler $e_y$ größer ist als $\underline{a}$ bzw. niedriger ist als $-\underline{a}$,

— drei Amplitudenvergleicher, die das Signal Y mit den Schwellen 0, 2 bzw. −2 vergleichen und Signale $Q_y$, $R_y$ bzw. $\overline{T}_y$ mit einem logischen Pegel 1 liefern, wenn das Signal Y größer ist als die Schwellen für die zwei ersten Vergleicher bzw. niedriger ist als die Schwelle für den dritten Vergleicher,

- wobei ein dritter Selektionskreis ein Signal $P_y$ liefert, so daß $P_y = N_y.\overline{M}_y$ ist,

- wobei ein zweiter Selektionskreis ein Signal $A_y$ liefert, so daß $A_y = R_y.Q_y + \overline{T}_y.\overline{Q}_y$ ist, und

wobei ein EXKLUSIV-NICHT-ODER-Kreis am Eingang die Signale $A_x$ und $A_y$ erhält,

wobei ein UND-Kreis das Ausgangssignal des EXKLUSIV-NICHT-ODER-Kreises sowie die Signale $P_x$ und $P_y$ erhält und das Signal $P_z$ liefert, das ebenso wie das Basis-Taktsignal H zum liefern des Abtasttaktsignals einem UND-Kreis zugeführt wird.

5. Schaltungsanordnung zum Rückgewinnen des Trägers einer digital modulierten Welle mit einer (Phasen)-Symmetrie $2\pi/M$, nach einem der Ansprüche 1 bis 3, dadurch gekennzeichnet, daß die Mittel zum Selektieren der empfangenen Punkte und die Mittel zum Erzeugen des Abtasttaktsignals die folgenden Elemente aufweisen:

in der In-Phasen-Strecke:

— zwei Amplitudenvergleicher, die den Fehler $e_x$ = X - $\hat{X}$ mit den Schwellen $\underline{a}$ bzw. $-\underline{a}$ vergleichen, und Signale $\overline{M}_x$ bzw. $N_x$ mit einem logischen Pegel 1 liefern, wenn der Fehler $e_x$ größer ist als $\underline{a}$ bzw. niedriger ist als $-\underline{a}$,

— drei Amplitudenvergleicher, die das Signal X mit den Schwellen 0, 2 bzw. −2 vergleichen und Signale $Q_x$, $R_x$ bzw. $\overline{T}_x$ mit einem logischen Pegel 1 liefern, wenn das Signal X größer ist als die Schwellen für die zwei ersten Vergleicher bzw. niedriger ist als die Schwelle für den dritten Vergleicher,

- wobei ein erster Selektionskreis ein Signal $P_x$ liefert, so daß $P_x = N_x.Q_x + \overline{M}_x.\overline{Q}_x$ ist,

- wobei ein anderer Selektionskreis ein Signal $A_x$ liefert, so daß $A_x = R_x.Q_x + \overline{T}_x.\overline{Q}_x$ ist, wobei das Zeichen (.) die logische Funktion UND darstellt und wobei das Zeichen ( + ) die logische Funktion ODER darstellt,

und in der Quadratur-Phasen-Strecke,

— zwei Amplitudenvergleicher, die den Fahler $e_y$ = Y - $\hat{Y}$ mit den Schwellen $\underline{a}$ bzw. $-\underline{a}$ vergleichen und Signale $\overline{M}_y$ bzw. $N_y$ mit einem logischen Pegel 1 liefern, wenn der Fehler $e_y$ größer ist als $\underline{a}$ bzw. niedriger ist als $-\underline{a}$,

— drei Amplitudenvergleicher, die das Signal Y mit den Schwellen 0, 2 bzw. −2 vergleichen und Signale $Q_y$, $R_y$ bzw. $\overline{T}_y$ mit einem logischen Pegel 1 liefern, wenn das Signal Y größer ist als die Schwellen für die zwei ersten Vergleicher bzw. niedriger ist als die Schwelle für den dritten Vergleicher,

- wobei ein weiterer Selektionskreis ein Signal $P_y$ liefert, so daß $P_y = N_y.Q_y + \overline{M}_y.\overline{Q}_y$ ist

- wobei ein weiterer Selektionskreis ein Signal $A_y$ liefert, so daß $A_y = R_y.Q_y + \overline{T}_y.\overline{Q}_y$ ist, und

wobei ein EXKLUSIV-NICHT-ODER-Kreis am Eingang die Signale $A_x$ und $A_y$ erhält, und

wobei ein UND-Kreis das Ausgangssignal des EXKLUSIV-NICHT-ODER-Kreises sowie die Signale $P_x$ und $P_y$ erhält und das Signal $P_z$ liefert, das ebenso wie das Basis-Taktsignal H zum Liefern des Abtasttaktsignals einem UND-Kreis zugeführt wird.

**Claims**

1. A circuit for recovering the carrier of a digitally modulated wave having a phase symmetry $2\pi/M$, where M is the symmetry order, including means for fast automatic acquisition comprising a voltage-controlled oscillator (17) having an output supplying said carrier and a control input to which an error signal $\varepsilon(\phi)$ is applied in order to change the phase of the oscillator (17) and adjust it to the phase of said digitally modulated wave, said wave being introduced:

— onto a first channel (10) comprising the series arrangement of:

- a demodulator (11) receiving the modulated wave and the oscillator output signal and producing a demodulated signal $X_1$,

- a low-pass filter (12) acting on the demodulated signal $X_1$ and producing a filtered signal X,

- means for reconstructing (13) a signal $\hat{X}$ and for

determining the error $e_x = X - \hat{X}$ between the signals $X - \hat{X}$,

— onto a second channel (20) comprising the series arrangement of:

- a phase shifter (24) for shifting the phase of the oscillator signal through 90°,

- a demodulator (21) receiving said modulated wave and the output signal of the phase shifter (24) and producing a quadrature-demodulated signal $Y_1$,

- a low-pass filter (22) acting on the demodulated signal $Y_1$ and producing a filtered signal $Y$,

- means for reconstructing (23) a signal $\hat{Y}$ and for determining an error signal $e_y = Y - \hat{Y}$ between signal $Y$ and $\hat{Y}$,

these two channels (10, 20) being joined together with the aid of a phase comparator arrangement (30) which receives the signals $X$, $e_x$, $Y$, $e_y$ and a basic clock $H$ (recovered symbol clock) and produces a comparator signal $S$, and also a variable-rate sampling clock which reproduces the basis clock $H$ by excluding certain edges, the comparator signal $S$ entering a bistable trigger (14) under the control of said sampling clock, the bistable trigger output being connected to an amplifying filter (15, 16) which produces the oscillator control error signal $\varepsilon(\phi)$, the representation by in-phase and quadrature-phase signal points defining states of a signal constellation of said digitally modulated wave, characterized in that the phase comparator arrangement (30) comprises means for selecting received signal points with the aid of selection zones located around specific diagonal states in each quadrant of the signal constellation so that the circles passing through the non-diagonal states in each quadrant do not intersect said selection zones, and that the zones arranged around the points of the type $(\pm 1, \pm 1)$ do not come into contact with the axis (OX, OY) of said signal constellation, and means for generating said sampling clock in which are eliminated all the active edges capable of validating in the bistable trigger zero-crossings of the phase comparator output signal which do not correspond with a phase difference equal to $2\pi/M$, where k and M are integers.

2. A carrier recovery circuit as claimed in Claim 1, characterized in that said received signal point selection means comprise comparison means comparing the coordinates of received signal points with predetermined thresholds.

3. A carrier recovery circuit as claimed in Claim 2, characterized in that the previously established thresholds are determined such that:

— every received signal point in the zones located around said certain diagonal states has a phase difference relative to the transmitted signal point such, that the absolute value of this phase difference remains below, but for $2\pi/M$, a predetermined value.

4. A circuit for recovering the carrier of a digitally modulated wave having a phase symmetry $2\pi/M$ as claimed in any one of the Claims 1 to 3, characterized in that the received signal point selection means and the sampling clock generating means comprise

on the in-phase channel:

— two amplitude comparators comparing the error $e_x = X - \hat{X}$ to respective thresholds $\underline{a}$ and $-\underline{a}$ and producing respective signals $\overline{M}_x$ and $N_x$ at a logic value 1 when the error $e_x$ exceeds $\underline{a}$ or is less than $-\underline{a}$ respectively,

— three amplitude comparators comparing the signal X to respective thresholds 0, 2 and −2 and producing respective signals $Q_x$, $R_x$ and $\overline{T}_x$ at a logic value 1 when the signal X exceeds the thresholds for the first and second comparators and is less than the threshold for the third comparator respectively,

- a first selection circuit producing a signal $P_x$ such that $P_x = N_x.\overline{M}_x$

- a second selection circuit producing a signal $A_x$ such that $A_x = R_x.Q_x + \overline{T}_x.\overline{Q}_x$

where the symbol (.) represents the logic AND function and the symbol (+) represents the logic OR function;

and on the quadrature channel:

— two amplitude comparators comparing the error $e_y = Y - \hat{Y}$ to respective thresholds $\underline{a}$ and $-\underline{a}$ and producing respective signals $\overline{M}_y$ and $N_y$ at a logic value 1 when the error $e_y$ exceeds $\underline{a}$ or is less than $-\underline{a}$ respectively,

— three amplitude comparators comparing the signal Y to respective thresholds 0, 2 and −2, and producing respective signals $Q_y$, $R_y$ and $\overline{T}_y$ at a logic value 1 when the signal Y exceeds the thresholds for the first and second comparators and is less than the threshold for the third comparator respectively,

- a third selection circuit producing a signal $P_y$ such that $P_y = N_y.\overline{M}_y$

- a fourth selection circuit producing a signal $A_y$ such that $A_y = R_y.Q_y + \overline{T}_y.\overline{Q}_y$;

and an exclusive NOR circuit receiving the signals $A_x$ and $A_y$ at its inputs,

and an AND-circuit receiving the output of the exclusive-NOR circuit and the signals $P_x$ and $P_y$, and producing as signal $P_z$, which signal $P_z$ and also the basic clock $H$ are applied to an AND-circuit for producing the sampling clock.

5. A circuit for recovering the carrier of a digitally modulated wave having a phase symmetry $2\pi/M$ as claimed in any one of the Claims 1 to 3, characterized in that the received signal point selection means and the sampling clock generating means comprise:

in the in-phase channel:

— two amplitude comparators comparing the error $e_x = X - \hat{X}$ to respective thresholds $\underline{a}$ and $-\underline{a}$ and producing respective signals $\overline{M}_x$ and $N_x$ at a logic value 1 when the error $e_x$ exceeds $\underline{a}$ or is less than $-\underline{a}$ respectively,

— three amplitude comparators comparing the signal X to respective thresholds 0, 2 and −2 and producing the respective signals $Q_x$, $R_x$ and $\overline{T}_x$ at a logic value 1 when the signal X exceeds the thresholds for the first and second comparators and is less than the threshold for the third comparator respectively,

- a first selection circuit producing a signal $P_x$ such that $P_x = N_x.Q_x + \overline{M}_x.\overline{Q}_x$

- a second selection circuit producing a signal $A_x$ such that $A_x = R_x.Q_x + \overline{T}_x.\overline{Q}_x$

where the symbol (.) respresents the logic AND function and the symbol (+) represents the logic OR function;

and on the quadrature channel:

— two amplitude comparators comparing the er-

ror $e_y = Y - \hat{Y}$ to respective thresholds $\underline{a}$ and $-\underline{a}$ and producing respective signals $\overline{M}_y$ and $N_y$ at a logic value 1 when the error $e_y$ exceeds $\underline{a}$ or is less than $-\underline{a}$ respectively,

— three amplitude comparators comparing the signal Y to respective thresholds 0, 2 and $-2$ and producing respective signals $Q_y$, $R_y$ and $\overline{T}_y$ at a logic value 1 when the signal Y exceeds the thresholds for the first and second comparators and is less than the thresholds for the third comparator respectively,

- a third selection circuit producing a signal $P_y$ such that $P_y = N_y.Q_y + \overline{M}_y.\overline{Q}_y$

- a fourth selection circuit producing a signal $A_y$ such that $A_y = R_y.Q_y + \overline{T}_y.\overline{Q}_y$;

and an exclusive NOR-circuit receiving the signals $A_x$ and $A_y$ at its input,

and an AND-circuit receiving the output of the exclusive NOR-circuit and the signals $P_x$ and $P_y$, and producing a signal $P_z$, which signal $P_z$ and also the basic clock H are applied to an AND-circuit for producing the sampling clock.

FIG.1

FIG.2

FIG.3

FIG.4

FIG.5

FIG.6

FIG.7